Europäisches Patentamt

European Patent Office

Office européen des brevets

(19)

(11) Veröffentlichungsnummer: **0 359 954**
**A1**

(12) **EUROPÄISCHE PATENTANMELDUNG**

(21) Anmeldenummer: **89114171.5**

(22) Anmeldetag: **01.08.89**

(51) Int. Cl.5: **B60R 22/20**

(30) Priorität: **02.09.88 DE 3829929**

(43) Veröffentlichungstag der Anmeldung:
**28.03.90 Patentblatt 90/13**

(84) Benannte Vertragsstaaten:
**AT DE ES FR GB IT NL SE**

(71) Anmelder: **TRW REPA GMBH**
**Industriestrasse 20**
**D-7077 Alfdorf(DE)**

(72) Erfinder: **Adomeit, H.-D., Dr.-Ing.**
**Grolmanstrasse 16**
**D-1000 Berlin 12(DE)**

(74) Vertreter: **Degwert, Hartmut, Dipl.-Phys. et al**
**Patent Attorneys Prinz, Leiser, Bunke &**
**Partner Manzingerweg 7**
**D-8000 München 60(DE)**

(54) Höhenverstellvorrichtung für einen Beschlag eines Sicherheitsgurt-Rückhaltesystems in Kraftfahrzeugen.

(57) Die Höhenverstellvorrichtung für einen Umlenkbeschlag (10) eines Sicherheitsgurt-Rückhaltesystems in Kraftfahrzeugen weist als wesentliches lasttragendes Element eine gestreckte Platte (14) auf,
die an ihrem einen Ende am Fahrzeugaufbau verschwenkbar gelagert ist, während an ihrem anderen
Ende der Umlenkbeschlag (10) befestigt ist. Durch
eine Rasteinrichtung (16, 30) ist die gestreckte Platte
(14) in verschiedenen Schwenkstellungen selektiv
feststellbar. Die eingestellte Höhe des Umlenkbeschlages (10) wird durch die Schwenkstellung der
gestreckten Platte (14) bestimmt.

Fig. 1

EP 0 359 954 A1

## Höhenverstellvorrichtung für einen Beschlag eines Sicherheitsgurt-Rückhaltesystems in Kraftfahrzeugen

Die Erfindung betrifft eine Höhenverstellvorrichtung für einen Beschlag eines Sicherheitsgurt-Rückhaltesystems in Kraftfahrzeugen.

Derartige Höhenverstellvorrichtungen sind in zahlreichen Ausführungen bekannt. Bei Dreipunkt-Sicherheitsgurtsystemen ist gewöhnlich ein Umlenkbeschlag an einem Schieber befestigt, der in einer am Fahrzeugaufbau verankerten, zumindest annähernd senkrecht verlaufenden Schiene verschiebbar und in verschiedenen Stellungen verrastbar ist. Die Rasteinrichtung muß ebenso wie die Schiene und der Schieber für die sehr hohen Unfallbeanspruchungen dimensioniert werden, da eine Lösung der Verrastung unter Last eine unerwünschte oder unzulässige Vorverlagerung des zu sichernden Fahrzeuginsassen gestatten würde. Um die strengen Anforderungen an die mechanische Festigkeit zu erfüllen, sind herkömmliche Höhenverstellvorrichtungen daher relativ groß und schwer dimensioniert.

Der Erfindung liegt die Aufgabe zugrunde, eine Höhenverstellvorrichtung für einen Beschlag eines Sicherheitsgurt-Rückhaltesystems in Kraftfahrzeugen zur Verfügung zu stellen, die mit wenigen leichten und einfachen Bauteilen auch strenge Festigkeitsforderungen erfüllt.

Diese Aufgabe wird bei der gattungsgemäßen Höhenverstellvorrichtung erfindungsgemäß durch folgende Merkmale gelöst: zum einen ist der Beschlag an dem einen Ende einer gestreckten Platte befestigt, die an ihrem anderen Ende schwenkbar am Fahrzeugaufbau gelagert ist; zum anderen ist die gestreckte Platte durch eine Feststelleinrichtung in verschiedenen Schwenkstellungen selektiv feststellbar; ferner wird die eingestellte Höhe des Beschlages durch die Schwenkstellung der gestreckten Platte bestimmt. Bei der erfindungsgemäßen Höhenverstellvorrichtung wird also das Prinzip eines in einer Schiene geführten Schiebers verlassen. Lasttragendes Element ist die gestreckte Platte, die im wesentlichen nur auf Zug beansprucht wird. Die Feststelleinrichtung, welche die Schwenkstellung der gestreckten Platte bestimmt und als Rasteinrichtung ausgebildet werden kann, wird unter Last nur durch die relativ geringen Querkomponenten beansprucht, die entstehen, wenn die Gurtzugrichtung von der Längsrichtung der gestreckten Platte abweicht. Da aber die Gurtzugrichtung bei korrekt eingestellter Höhenverstellvorrichtung im wesentlichen mit der Längsrichtung der gestreckten Platte übereinstimmt, kann auch eine Verformung der Feststelleinrichtung bzw. Rasteinrichtung unter Last zugelassen werden. Eine definierte plastische Verformung der Feststelleinrichtung unter Last kann sogar ausgenutzt werden, um eine Kraftbegrenzung und Energieabsorption zu erzielen.

Die als Rasteinrichtung ausgebildete Feststelleinrichtung weist vorzugsweise mehrere entlang einem mit dem Schwenklager der gestreckten Platte konzentrischen Kreisbogen voneinander beabstandete Rastöffnungen und einen selektiv mit diesen Rastöffnungen in Eingriff bringbaren Rastbolzen auf. Die Rastöffnungen sind in einem Teil angebracht, welches am Fahrzeugaufbau befestigt wird. Dieses Teil kann integrierter Bestandteil des Fahrzeugaufbaus sein, beispielsweise in Form eines angeschweißten Bleches, oder nachträglich aufgesetzt und mittels eines Gewindebolzens befestigt werden, der nach üblichen Normen zur Befestigung eines herkömmlichen Umlenkbeschlages dient. Letztgenannte Lösung eignet sich besonders für die nachträgliche Ausrüstung der hinteren Sicherheitsgurtsysteme mit einer Höhenverstellvorrichtung.

Weitere vorteilhafte Ausgestaltungen der Höhenverstellvorrichtung bestehen darin, daß die gestreckte Platte mittels eines Langlochs auf einem Bolzen gelagert ist, der ihr Schwenklager bildet und am Fahrzeugaufbau verankert ist. Die gestreckte Platte ist gegen Federkraft in ihrer Längsrichtung zur Lösung ihrer Verrastung verschiebbar. Nach Lösung der Verrastung kann die gestreckte Platte verschwenkt werden, bis ihr Rastbolzen unter der Wirkung der Feder in die jeweils nächste Rastöffnung einfällt.

Weitere vorteilhafte Ausgestaltungen der Erfindung sind den Unteransprüchen entnehmbar.

Zwei Ausführungsformen der Erfindung werden nun unter Bezugnahme auf die Zeichnung näher beschrieben. In der Zeichnung zeigen:

Fig. 1 eine schematische Draufsicht einer ersten Ausführungsform der Höhenverstellvorrichtung;

Fig. 2 einen Schnitt entlang Linie II-II in Fig. 1;

Fig. 3 eine Draufsicht einer zweiten Ausführungsform der Höhenverstellvorrichtung; und

Fig. 4 einen Schnitt entlang Linie IV-IV in Fig. 3.

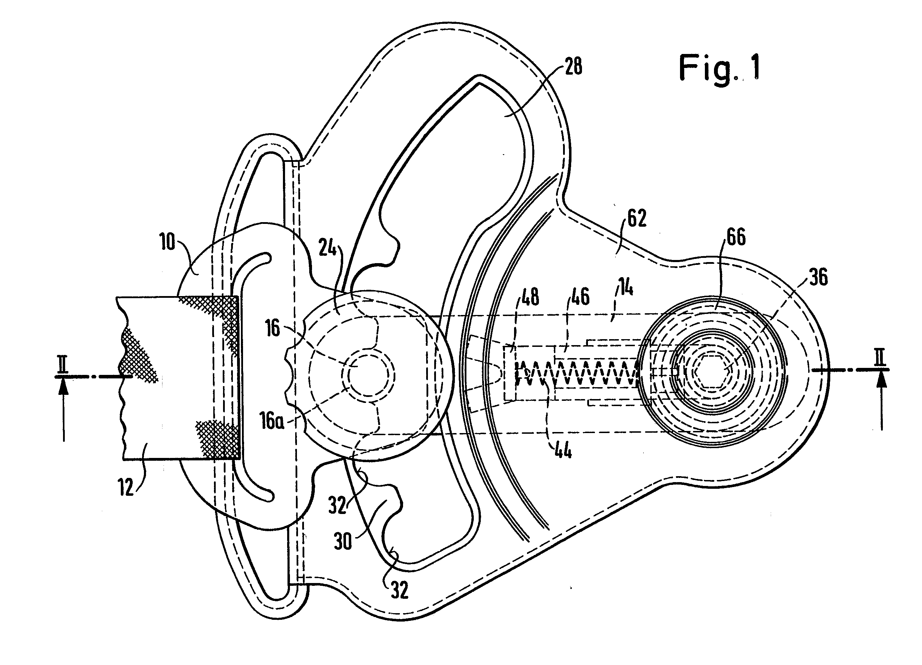

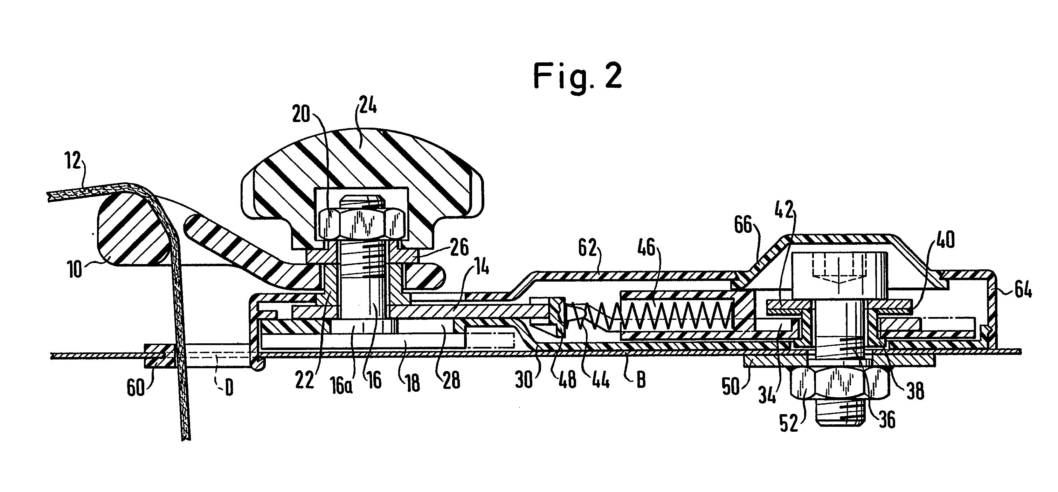

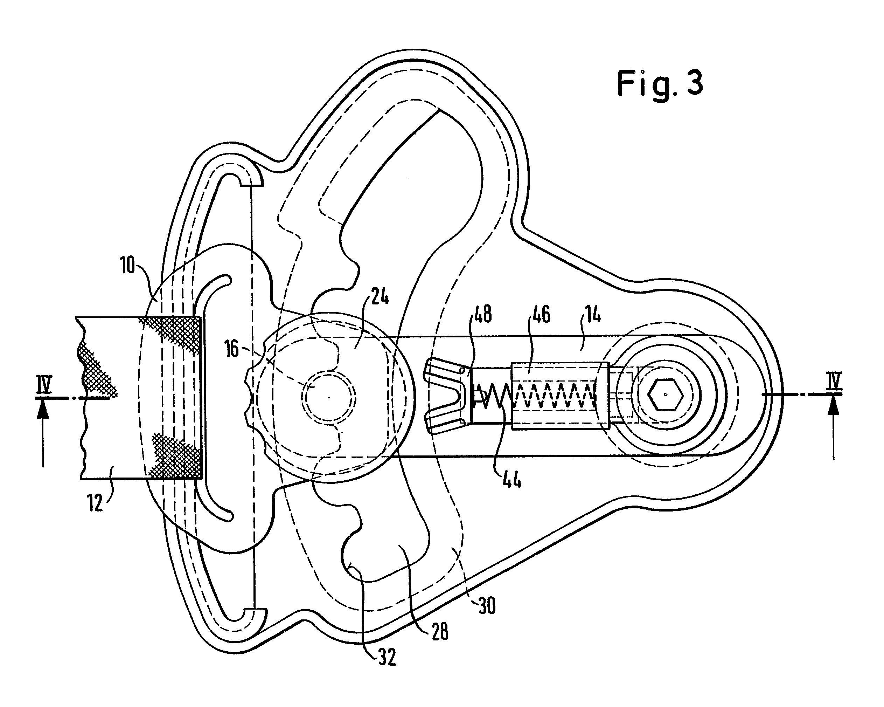

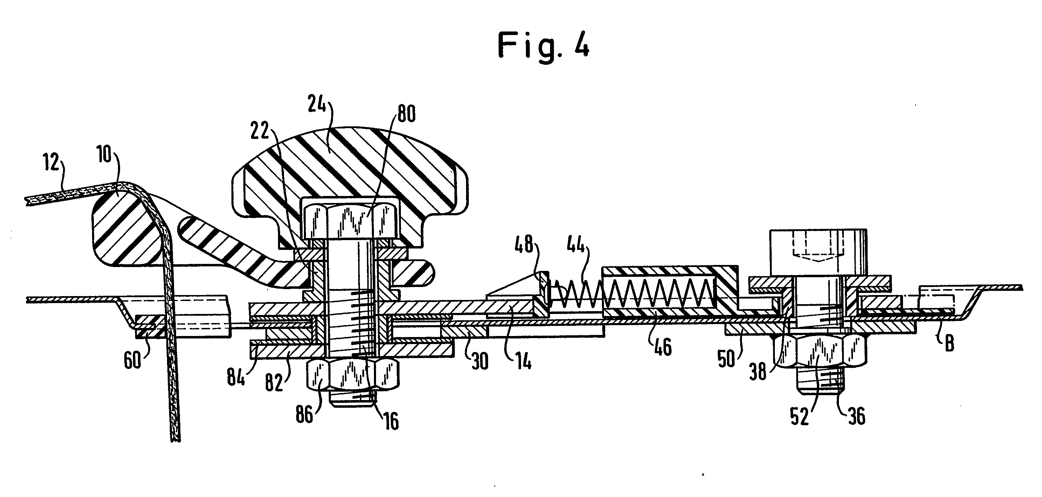

Beide Ausführungsformen der Höhenverstellvorrichtung sind besonders für die hinteren Sicherheitsgurtsysteme eines Personenkraftfahrzeugs geeignet. Die erste, in den Fig. 1 und 2 gezeigte Ausführungsform ist für die fakultative Ausrüstung oder Nachrüstung geeignet, während die zweite, in den Fig. 3 und 4 gezeigte Ausführungsform als fest in das Fahrzeug integriertes System konzipiert ist.

In den Fig. 1 und 2 ist zunächst ein Umlenkbeschlag 10 zu erkennen, durch dessen Führungsschlitz das Gurtband 12 verläuft. Der Umlenkbeschlag 10 ist an dem einen Ende einer lasttragenden gestreckten Platte 14 mittels eines Schraubbolzens 16 befestigt, der an seinem einen Ende in einer Halteplatte 18 verankert ist, mit seinem Schaft durch eine Bohrung der gestreckten Platte 14 hindurchführt und auf dessen anderes Ende eine Schraubmutter 20 aufgeschraubt ist. Der Umlenkbeschlag 10 ist mittels einer Buchse 22 verdrehbar auf dem Schaft des Schraubbolzens 16 gelagert. Ein gerändelter Betätigungsgriff 24 weist eine Aussparung zur Aufnahme der Schraubmutter 20 auf und ist mit einem radial nach innen vorspringenden Rand versehen, der die Schraubmutter 20 hintergreift, um den Betätigungsgriff 24 auf der Schraubmutter 20 zu sichern. Eine Buchse 26 mit angeformter Abstandshalterscheibe ist zwischen Betätigungsgriff 24 und Umlenkbeschlag 10 eingefügt.

Der Schaft des Schraubbolzens 16 ist ferner durch einen kreisbogenförmigen Schlitz 28 einer Rastplatte 30 hindurchgeführt. An seinem der Halteplatte 18 benachbarten Ende weist der Schaft des Schraubbolzens 16 eine zylindrische Verbreiterung 16a auf. Diese zylindrische Verbreiterung 16a ist passend zu annähernd halbkreisförmigen Rastöffnungen 32 ausgebildet, die im Abstand voneinander entlang dem kreisbogenförmigen Schlitz 28 angeordnet sind.

An ihrem vom Betätigungsgriff 24 abgewandten Ende ist die gestreckte Platte 14 mit einem in ihrer Längsrichtung verlaufenden Langloch 34 versehen. Dieses Langloch 34 dient einerseits zur schwenkbaren Lagerung der gestreckten Platte 14 auf einem am Fahrzeugaufbau befestigten Schraubbolzen 36 und andererseits als Führung für eine begrenzte Längsverschiebung der gestreckten Platte 14 in bezug auf den Schraubbolzen 36. Der Schaft des Schraubbolzens 36 ist von einer Kunststoffbuchse 38 umgeben, die in dem Langloch 34 aufgenommen ist. Zwischen der Kunststoffbuchse 38 und dem Kopf des Schraubbolzens 36 sind ferner eine Führungsscheibe 40 und eine Gegenscheibe 42 angeordnet. Das Langloch 34 dient ferner zur Aufnahme einer Druckfeder 44, die sich an ihrem dem Schraubbolzen 36 zugewandten Ende am Boden eines Führungsteils 46 abstützt, das formschlüssig in das Langloch 34 eingesetzt ist. An ihrem anderen Ende stützt sich die Druckfeder 44 an einem mit einem angeformten Führungszapfen versehenen Lagerteil 48 ab, das an einer Schmalseite des Langlochs 34 gehalten ist.

Wie aus Fig. 2 ersichtlich ist, wird diese Ausführungsform der Höhenverstellvorrichtung auf das Blech B des Fahrzeugaufbaus aufgesetzt. Auf der Rückseite des Bleches B ist in herkömmlicher Weise eine Verstärkungsplatte 50 aufgeschweißt, an welcher eine Schaubmutter 52 befestigt ist, in welche der Schraubbolzen 36 eingeschraubt wird. Das Blech B weist eine Durchtrittsöffnung D für das Gurtband 12 auf. An den Rändern dieser Durchtrittsöffnung D kann eine Verkleidung befestigt werden. Zur Verkleidung gehören die in Fig. 2 mit 60, 62, 64 und 66 bezeichneten Teile, von denen das Teil 62 den Rand der Durchtrittsöffnung D mit einer Lippe hintergreift, während das Teil 64 mit der Rastplatte 30 durch eine Schnappverbindung verbunden ist. Die Rastplatte 30 ist ihrerseits mittels des Schraubbolzens 36 am Fahrzeugaufbau befestigt.

In Fig. 2 ist die verrastete Stellung der gestreckten, lasttragenden Platte 14 mit durchgezogenen Linien und die entrastete Stellung dieser gestreckten Platte 14 strichpunktiert dargestellt. Aufgrund ihres Langloches 34 kann die gestreckte Platte 14 über den Betätigungsgriff 24 entgegen der Kraft der Druckfeder 44 in ihrer Längsrichtung verschoben werden, um den durch den Schaft des Schraubbolzens 16 gebildeten Rastbolzen bzw. dessen Teil 16a aus der jeweiligen Rastöffnung 32 zu lösen. Anschließend kann die gestreckte Platte 14 mit dem Umlenkbeschlag 10 in die gewünschte Stellung verschwenkt werden, woraufhin durch die Druckfeder 44 eine selbsttätige Verrastung in der nächst erreichbaren Rastöffnung 32 erfolgt.

Bei der in Fig. 1 gezeigten Orientierung von gestreckter Platte 14 und Gurtband 12 wird die Zuglast aus dem Gurtsystem praktisch ausschließlich über die gestreckte Platte 14 und den Schraubbolzen 36 auf den Fahrzeugaufbau übertragen. Die Rastplatte 30 braucht kein lasttragend dimensioniertes Element zu sein. Es kann sich auch um ein verformbares Teil handeln, das sogar aus Kunststoff bestehen kann.

Bei der Ausführungsform nach den Fig. 3 und 4 ist das Blech B des Fahrzeugs zur leichteren Integration der Höhenverstellvorrichtung mit einer Ausstanzung und Einprägung versehen. Im Gegensatz zur Ausführungsform nach den Fig. 1 und 2 ist die Rastplatte 30 nicht am Schraubbolzen 36 befestigt, sondern unmittelbar am Fahrzeugblech befestigt, beispielsweise angeschweißt. Ferner ist der Schraubbolzen 16 mit einem Schraubenkopf 80 versehen, der in einer Ausnehmung des Betätigungsgriffes 24 aufgenommen ist, und führt mit seinem Gewindeabschnitt durch eine Gegenplatte 82 hindurch, die über eine Gleitscheibe 84 an der Rastplatte 30 in Anlage ist und durch eine Schraubmutter 86 gesichert ist, welche auf das Ende des Schraubbolzens 16 aufgeschraubt ist.

Auf die Darstellung einer Verkleidung, die auf die Wünsche des Fahrzeugherstellers zugeschnitten wird, ist in den Fig. 3 und 4 verzichtet worden. Ansonsten sind Aufbau und Wirkungsweise der Ausführungsform nach den Fig. 3 und 4 die gleichen wie bei der Ausführungsform nach den Fig. 1 bis 2, so daß sich eine erneute Beschreibung erübrigt.

**Ansprüche**

1. Höhenverstellvorrichtung für einen Beschlag eines Sicherheitsgurt-Rückhaltesystems in Kraftfahrzeugen, dadurch gekennzeichnet, daß:

a) der Beschlag (10) an dem einen Ende einer gestreckten Platte (14) befestigt ist, die an ihrem anderen Ende schwenkbar am Fahrzeugaufbau gelagert ist;

b) die gestreckte Platte (14) durch eine Feststelleinrichtung (16, 30) in verschiedenen Schwenkstellungen selektiv feststellbar ist; und

c) die eingestellte Höhe des Beschlages (10) durch die Schwenkstellung der gestreckten Platte (14) bestimmt ist.

2. Höhenverstellvorrichtung nach Anspruch 1, dadurch gekennzeichnet, daß die Feststelleinrichtung eine Rasteinrichtung ist.

3. Höhenverstellvorrichtung nach Anspruch 2, dadurch gekennzeichnet, daß die Rasteinrichtung mehrere entlang einem mit dem Schwenklager der gestreckten Platte (14) konzentrischen Kreisbogen voneinander beabstandete Rastöffnungen (32) und einen selektiv mit diesen Rastöffnungen (32) in Eingriff bringbaren Rastbolzen (16a) umfaßt.

4. Höhenverstellvorrichtung nach Anspruch 3, dadurch gekennzeichnet, daß der Rastbolzen (16a) an dem Ende der gestreckten Platte (14), welches dem Beschlag (10) benachbart ist, befestigt ist und die Rastöffnungen (32) in einem am Fahrzeugaufbau befestigten Teil (30) gebildet sind.

5. Höhenverstellvorrichtung nach einem der Ansprüche 2 bis 4, dadurch gekennzeichnet, daß die gestreckte Platte (14) gegen Federkraft in ihrer Längsrichtung zur Lösung ihrer Verrastung verschiebbar ist.

6. Höhenverstellvorrichtung nach Anspruch 5, dadurch gekennzeichnet, daß die gestreckte Platte (14) mittels eines Langlochs (34) auf einem Bolzen (36) gelagert ist, der ihr Schwenklager bildet und am Fahrzeugaufbau verankert ist.

7. Höhenverstellvorrichtung nach einem der vorstehenden Ansprüche, dadurch gekennzeichnet, daß sie für die Montage anstelle eines herkömmlichen, nicht höhenverstellbaren Umlenkbeschlages der hinteren Sicherheitsgurtsysteme eines Personenkraftfahrzeugs ausgebildet und dimensioniert ist.

8. Höhenverstellvorrichtung nach den Ansprüchen 4 und 7, dadurch gekennzeichnet, daß das am Fahrzeugaufbau befestigte Teil (30), in dem die Rastöffnungen (32) gebildet sind, allgemein kreissegmentförmig ausgebildet und mit einem kreisbogenförmigen Schlitz (28) versehen ist, in dem die Rastöffnungen (32) gebildet sind, und daß dieses kreissegmentförmige Teil (30) an seinem dem kreisbogenförmigen Schlitz (28) gegenüber liegenden Ende auf demselben Bolzen (36) befestigt ist, auf dem die gestreckte Platte (14) schwenkbar gelagert ist.

9. Höhenverstellvorrichtung nach Anspruch 8, dadurch gekennzeichnet, daß das kreissegmentförmige Teil (30) nicht lasttragend dimensioniert ist.

10. Höhenverstellvorrichtung nach einem der Ansprüche 7 bis 9, dadurch gekennzeichnet, daß sie als Nachrüst- oder alternative Ausrüsteinheit für einen unmittelbar über einen Schraubbolzen am Fahrzeugaufbau befestigten Umlenkbeschlag eines Dreipunkt-Sicherheitsgurtsystems ausgebildet ist.

11. Höhenverstellvorrichtung nach Anspruch 4, dadurch gekennzeichnet, daß die Rastöffnungen (32) in einem kreisbogenförmigen, mit der Achse des Schwenklagers der gestreckten Platte (14) konzentrischen Schlitz (28) in einer am Fahrzeugaufbau verankerten Rastplatte (30) gebildet sind.

12. Höhenverstellvorrichtung nach einem der Ansprüche 2 bis 11, dadurch gekennzeichnet, daß die Rasteinrichtung zumindest teilweise aus verformbaren Elementen aufgebaut ist, die unter Last eine Kraftbegrenzung und Energieabsorption durch definierte plastische Verformung bewirken.

13. Höhenverstellvorrichtung nach einem der vorstehenden Ansprüche, dadurch gekennzeichnet, daß der Beschlag (10) an der gestreckten Platte (14) mittels eines Bolzens (16) befestigt ist, an dem auch ein Handbetätigungsgriff (24) befestigt ist.

Fig. 1

EP 0 359 954 A1

# Fig. 2

EP 0 359 954 A1

Fig. 3

EP 0 359 954 A1

# Fig. 4

EP 0 359 954 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 539 359 (OPEL) * Figuren 4,5; Seite 6, Zeilen 3-20; Seite 2, Zeilen 1-3 * | 1-4,6,7 ,10,13 | B 60 R 22/20 |
| A | ----- | 5,8 | |

**RECHERCHIERTE SACHGEBIETE (Int. Cl.5)**

B 60 R

Der vorliegende Recherchenbericht wurde für alle Patentansprüche erstellt

| Recherchenort | Abschlußdatum der Recherche | Prüfer |
|---|---|---|
| BERLIN | 30-11-1989 | STANDRING M A |

EPO FORM 1503 03.82 (P0403)